(19) **Europäisches Patentamt / European Patent Office / Office européen des brevets**

(11) **EP 4 526 072 B1**

(12) **FASCICULE DE BREVET EUROPEEN**

(45) Date de publication et mention
de la délivrance du brevet:
**08.04.2026   Bulletin 2026/15**

(21) Numéro de dépôt: **23730847.3**

(22) Date de dépôt: **17.05.2023**

(51) Classification Internationale des Brevets (IPC):
**B23K 9/00** (2006.01)      **B23K 9/167** (2006.01)
**B23K 9/23** (2006.01)      **B23K 9/235** (2006.01)
**B32B 1/08** (2006.01)      **B32B 15/01** (2006.01)
**C25B 9/65** (2021.01)      **H01M 8/0206** (2016.01)
**H01M 8/2465** (2016.01)      **B23K 1/00** (2006.01)
**B23K 1/19** (2006.01)      **B23K 101/38** (2006.01)

(52) Classification Coopérative des Brevets (CPC):
**B23K 1/0016; B23K 1/19; B23K 9/0026;
B23K 9/167; B23K 9/23; B23K 9/235; C25B 9/65;
H01M 8/0206; H01M 8/2465;** B23K 2101/38;
C25B 1/042; C25B 9/75; C25B 9/77; Y02E 60/50

(86) Numéro de dépôt international:
**PCT/FR2023/050711**

(87) Numéro de publication internationale:
**WO 2023/222981 (23.11.2023 Gazette 2023/47)**

(54) **CONDUCTEUR ELECTRIQUE SOUPLE COMPORTANT DES ELEMENTS RACCORDES ENTRE EUX PAR SOUDAGE TIG, PROCÉDÉ DE FABRICATION D'UN TEL CONDUCTEUR ÉLECTRIQUE SOUPLE, UTILISATION D'AU MOINS UN TEL CONDUCTEUR ÉLECTRIQUE, ET SYSTÈME ÉLECTROCHIMIQUE COMPRENANT UN TEL CONDUCTEUR ÉLECTRIQUE SOUPLE**

FLEXIBLER ELEKTRISCHER LEITER, BESTEHEND AUS DURCH WIG-SCHWEISSEN VERBUNDENEN ELEMENTEN, VERFAHREN ZUR HERSTELLUNG EINES SOLCHEN FLEXIBLEN ELEKTRISCHEN LEITERS, VERWENDUNG MINDESTENS EINES SOLCHEN ELEKTRISCHEN LEITERS UND ELEKTROCHEMISCHES SYSTEM, DAS EINEN SOLCHEN FLEXIBLEN ELEKTRISCHEN LEITER UMFASST

FLEXIBLE ELECTRICAL CONDUCTOR COMPRISING ELEMENTS JOINED TOGETHER BY TIG WELDING, METHOD FOR MANUFACTURING SUCH A FLEXIBLE ELECTRICAL CONDUCTOR, USE OF AT LEAST ONE SUCH ELECTRICAL CONDUCTOR, AND ELECTROCHEMICAL SYSTEM COMPRISING SUCH A FLEXIBLE ELECTRICAL CONDUCTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **18.05.2022   FR 2204723**

(43) Date de publication de la demande:
**26.03.2025   Bulletin 2025/13**

(73) Titulaire: **Commissariat à l'Energie Atomique et aux Energies Alternatives
75015 Paris (FR)**

(72) Inventeurs:
• **ALAMOME, Simon
38054 Grenoble Cedex 09 (FR)**
• **CUBIZOLLES, Geraud
38054 Grenoble Cedex 09 (FR)**

(74) Mandataire: **Santarelli
Tour Trinity
1 bis Place de la Défense
92400 Courbevoie (FR)**

(56) Documents cités:
**EP-A1- 3 098 889      JP-A- H01 283 772
US-A1- 2011 045 362**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## EP 4 526 072 B1

**Description**

**DOMAINE TECHNIQUE**

La présente invention se rapporte au domaine général de l'électrolyse à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone ($CO_2$), voire encore de la co-électrolyse de la vapeur d'eau et du dioxyde de carbone ($CO_2$) à haute température.

Plus précisément, l'invention se rapporte au domaine des dispositifs électrochimiques à haute température, tels que les électrolyseurs à oxydes solides à haute température, désignés habituellement par l'acronyme SOEC (pour « Solide Oxide Electrolysis Cell » en anglais), et les piles à combustible à oxydes solides à haute température, désignées habituellement par l'acronyme SOFC (pour « Solid Oxide Fuel Cells » en anglais), mais également les co-électrolyseurs de la vapeur d'eau à haute température avec le dioxyde de carbone, les systèmes réversibles pile à combustible et électrolyseur haute température, ou encore les piles ou électrolyseurs dits de moyenne température, de l'ordre de 400°C, encore appelés PCFC pour « Proton Ceramic Fuel Cell » en anglais.

Ainsi, de façon plus générale, l'invention se réfère au domaine des empilements de cellules à oxydes solides de type SOEC/SOFC fonctionnant à haute température. Ces empilements peuvent fonctionner à pression atmosphérique ou encore en sous pression.

Au-delà de tels empilements de cellules à oxydes solides de type SOEC/SOFC, l'invention est concernée par tout système où un besoin existe de conduction électrique en milieu oxydant à haute température ou dans des conditions conduisant à la dégradation rapide des matériaux conducteurs de l'électricité.

Plus particulièrement, l'invention concerne l'alimentation en courant électrique d'un empilement de cellules électrochimiques dans la zone chaude, et de manière plus particulière, un conducteur électrique souple, un procédé de fabrication d'un tel conducteur électrique, une utilisation d'au moins un tel conducteur électrique, et un système électrochimique comprenant un tel conducteur électrique souple (voir par exemple JP H01 283772 A, décrivant le préambule des revendications 1 et 15).

**ÉTAT DE LA TECHNIQUE ANTÉRIEURE**

Dans le cadre d'un électrolyseur à oxydes solides à haute température de type SOEC, il s'agit de transformer par le biais d'un courant électrique, au sein d'un même dispositif électrochimique, la vapeur d'eau ($H_2O$) en dihydrogène ($H_2$), ou d'autres combustibles tels que le méthane ($CH_4$), le gaz naturel, le biogaz, et en dioxygène ($O_2$), et/ou encore de transformer le dioxyde de carbone ($CO_2$) en monoxyde de carbone (CO) et en dioxygène ($O_2$). Dans le cadre d'une pile à combustible à oxydes solides à haute température de type SOFC, le fonctionnement est inverse pour produire un courant électrique et de la chaleur en étant alimentée en dihydrogène ($H_2$) et en dioxygène ($O_2$), typiquement en air et en gaz naturel, à savoir par du méthane ($CH_4$). Par souci de simplicité, la description suivante privilégie le fonctionnement d'un électrolyseur à oxydes solides à haute température de type SOEC réalisant l'électrolyse de la vapeur d'eau. Toutefois, ce fonctionnement est applicable à l'électrolyse du dioxyde de carbone ($CO_2$), voire encore de la co-électrolyse de la vapeur d'eau à haute température (EVHT) avec le dioxyde de carbone ($CO_2$). De plus, ce fonctionnement est transposable au cas d'une pile à combustible à oxydes solides à haute température de type SOFC.

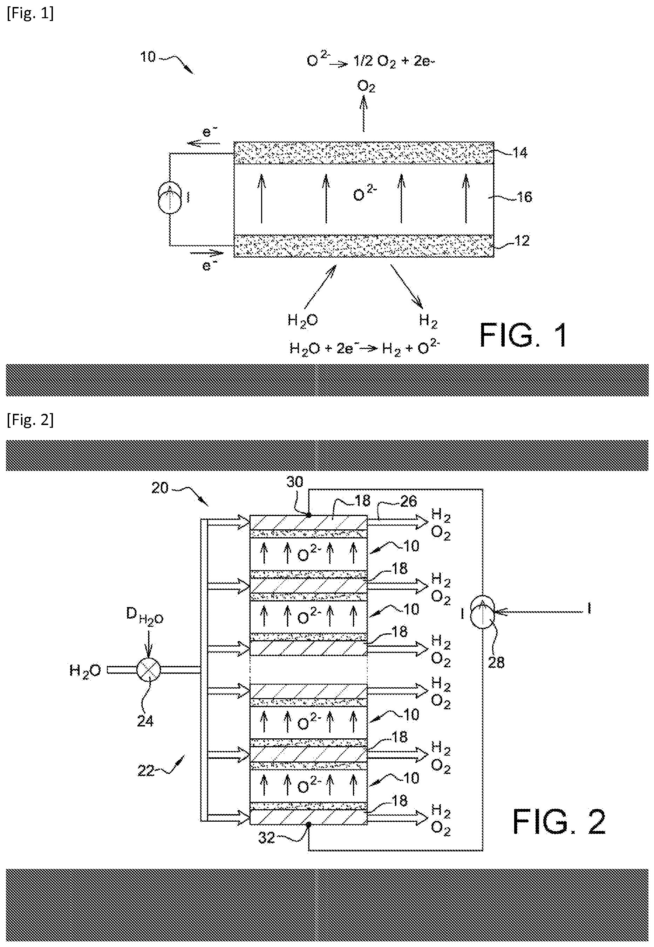

Comme cela est connu en soi, un électrolyseur de vapeur d'eau ($H_2O$) à haute température, ou électrolyseur EVHT, comprend un empilement de plusieurs cellules électrochimiques élémentaires à oxyde solide. En se référant à la figure 1, une cellule à oxyde solide 10, ou « SOC » (acronyme anglo-saxon « Solid Oxide Cell ») comprend notamment : a) une première électrode conductrice poreuse 12, ou « cathode », destinée à être alimentée en vapeur d'eau pour la production de dihydrogène ; b) une seconde électrode conductrice poreuse 14, ou « anode », par laquelle s'échappe le dioxygène ($O_2$) produit par l'électrolyse de l'eau injectée sur la cathode ; et c) une membrane à oxyde solide (électrolyte dense) 16 prise en sandwich entre la cathode 12 et l'anode 14, la membrane 16 étant conductrice anionique pour de hautes températures, usuellement des températures supérieures à 600°C.

En chauffant la cellule 10 au moins à cette température et en injectant un courant électrique $I$ à l'anode 14, il se produit alors une réduction de l'eau sur la cathode 12, ce qui génère du dihydrogène ($H_2$) au niveau de la cathode 12 et du dioxygène ($O_2$) au niveau de l'anode 14.

Un empilement 20 de telles cellules, ou « stack », ayant pour but de produire une quantité importante d'hydrogène, est illustré par la vue schématique de la figure 2. Notamment, les cellules 10 sont empilées les unes sur les autres en étant séparées par des plaques d'interconnexion 18 ou interconnecteurs. Ces plaques ont pour fonction à la fois d'assurer la continuité électrique entre les différentes électrodes des cellules 10, permettant ainsi une mise en série électrique de celles-ci, et de distribuer les différents gaz nécessaires au fonctionnement des cellules, ainsi que le cas échéant un gaz porteur pour aider à l'évacuation des produits de l'électrolyse et/ou à la gestion thermique de l'empilement.

Pour ce faire, les plaques 18 sont connectées à une alimentation 22 en vapeur d'eau pour l'injection de cette vapeur sur les cathodes des cellules 10 conformément à un débit de vapeur d'eau $D_{H2O}$ constant réglé par une vanne pilotable 24. Les plaques 18 sont également connectées à un collecteur de gaz 26 pour la collecte des gaz issus de l'électrolyse. Un exemple d'empilement et de structure de plaque d'interconnexion sont par exemple décrits dans la demande internationale WO 2011/110676 A1.

Pour la mise en œuvre effective de l'électrolyse par l'empilement 20, l'empilement est porté à une température supérieure à 600°C, usuellement une température comprise entre 650°C et 900°C, l'alimentation en gaz est mise en marche à débit constant et une source d'alimentation électrique 28 est branchée entre deux bornes 30, 32 de l'empilement 20 afin d'y faire circuler un courant *I*.

L'intensité *I* du courant électrique est usuellement de l'ordre de quelques centaines d'ampères, ce qui génère d'importantes pertes thermiques par effet Joule dans les conducteurs électriques. Pour optimiser l'efficacité énergétique des systèmes électrochimiques à oxyde solide, il convient de limiter ces pertes thermiques en développant en particulier des conducteurs électriques, également désignés par l'expression « cannes d'amenée de courant » (ou encore « bus-barres »), spécifiques.

Une canne d'amenée de courant dans l'empilement se présente généralement sous la forme d'une tige métallique. Prenant l'exemple d'une tige cylindrique, la résistance électrique R s'exprime par la formule suivante:

$$R = \rho \cdot \frac{l}{S}$$

où $\rho$ est la résistivité de la tige (en $\Omega$.m), *l* est la longueur de la tige (en m) et S est la section de la tige (en m$^2$).

Les pertes par effet Joule étant proportionnelles à la résistance R, pour limiter cet effet, il convient donc de réduire la résistance électrique de la canne d'amenée de courant. Les optimisations possibles consistent donc à:

- limiter la longueur de la tige,
- augmenter sa section,
- trouver un matériau avec une résistivité moindre et stable à haute température.

Les deux premières possibilités sont des choix de géométrie qui dépendent généralement de la forme du système électrochimique. Il existe donc des contraintes les concernant et/ou les cannes de l'état de la technique sont déjà optimisées vis-à-vis du système électrochimique. Le dernier point concerne le matériau constitutif de la tige qu'il faut choisir avec une résistivité minimale pour réduire les pertes ohmiques.

L'optimisation de ce dernier point n'a pas suffisamment été prise en considération. En effet, pour tous les développements en laboratoire de la technologie, l'efficacité énergétique n'est pas primordiale. En revanche, comme expliqué ci-dessous, une canne d'amenée de courant est baignée dans un environnement très corrosif, de sorte que la solution standard mise en œuvre consiste à utiliser des tiges pleines en alliage inoxydable, lesquelles constituent donc la solution de référence dans toutes les publications internationales. Si la résistivité à température ambiante (20°C) de ces tiges est déjà élevée, de l'ordre de $75.10^{-8}$ $\Omega$.m, il faut savoir que cette résistivité augmente fortement avec la température.

Ainsi, à 900°C, qui est une température haute de fonctionnement d'un électrolyseur à oxyde solide, la résistance électrique d'une tige en acier inoxydable est égale à $117.10^{-8}$ $\Omega$.m, ce qui génère une très importante perte ohmique. Ces aspects ont notamment été décrits dans la demande de brevet français FR 3 036 840 A1.

Si l'on cherche cependant à optimiser la résistivité électrique, le matériau généralement conseillé pour des conducteurs électriques soumis à une forte intensité de courant électrique est le cuivre. Une étude expérimentale réalisée par la Demanderesse a permis de déterminer la courbe de résistivité du cuivre en fonction de la température et de confirmer que le choix du cuivre permet de diminuer d'au minimum un facteur 10 les pertes ohmiques par rapport au matériau de référence sur toute la gamme de température de fonctionnement des systèmes à oxyde solide.

Cependant, l'une des contraintes fortes qu'il est nécessaire de prendre en considération est le problème de corrosion liée à l'environnement de l'empilement.

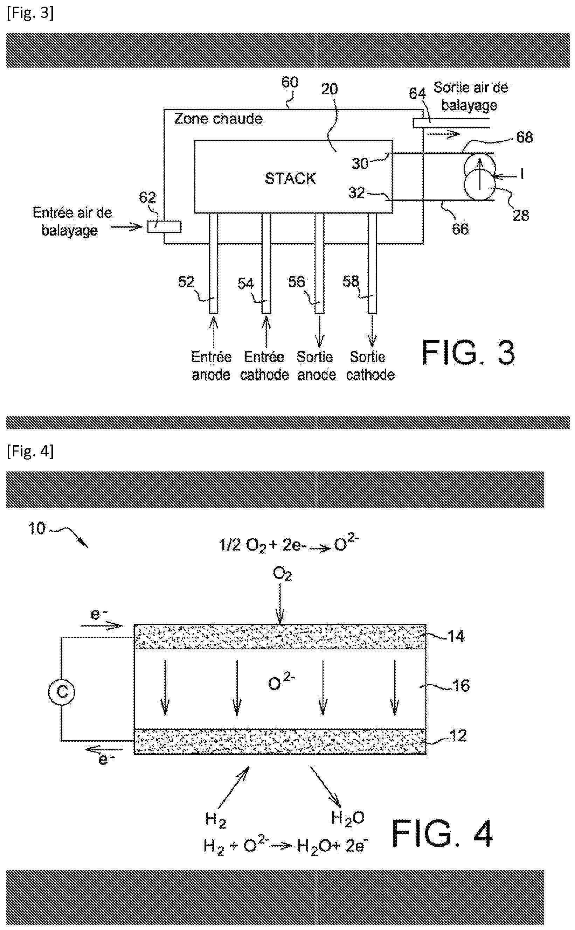

En se référant à la figure 3, l'empilement 20 est en effet enfermé dans une enceinte dite « thermique », dont la température est maintenue entre 650 et 900°C sous balayage d'air, un système électrochimique classique comprenant ainsi :

- l'électrolyseur EVHT 20, par exemple celui décrit en relation avec les figures 1 et 2 et comprenant un ensemble de conduites 52, 54, 56, 58 pour l'alimentation et la collecte des gaz des anodes et des cathodes des cellules électrochimiques de l'électrolyseur ;
- une enceinte 60 dans laquelle est logée l'électrolyseur 20, les conduites 52, 54, 56, 58 traversant une paroi de l'enceinte 60 pour leur connexion à des circuits d'alimentation et de collecte de gaz (non représentés). L'enceinte 60 comporte également une conduite d'entrée d'air 62, et une conduite de sortie d'air 64, l'enceinte 60 étant par exemple partout ailleurs hermétique aux gaz et aux liquides. La conduite 62 est apte à être connectée à un circuit d'alimentation d'air (non représenté) de manière à appliquer un balayage d'air de la zone chaude entourant l'électrolyseur 20, l'air de balayage étant évacué par la conduite de sortie 64 ; et

- deux conducteurs électriques 66, 68 connectés aux bornes 30, 32 de l'empilement 20 et traversant l'enceinte 60 pour leur connexion à la source de courant 28.

Dans ces conditions, deux conducteurs 66, 68 sous forme de tige en cuivre, dont une partie au moins est comprise dans l'enceinte 60, vont s'oxyder très rapidement. En outre, le cuivre ne résiste pas à l'oxydation à haute température car l'oxyde formé à la surface n'est pas suffisamment étanche et adhérent pour protéger le métal sous-jacent. Les matériaux connus pour résister à l'oxydation à haute température sont les alliages chromino et alumino formeurs tels que les aciers inoxydables et les alliages de nickel inoxydables car ceux-ci forment de la chromine et/ou de l'alumine qui sont des oxydes beaucoup plus protecteurs. Cependant, comme cela a été dit plus haut, ces alliages ont une résistivité électrique telle que leur utilisation entraîne des pertes énergétiques importantes.

Une pile à oxyde solide à haute température (SOFC) connait des problèmes similaires. En effet, un électrolyseur EVHT et une pile SOFC sont des structures identiques, seul leur mode de fonctionnement étant différent, l'électrolyseur fonctionnant en mode réduction du gaz carbonique ($CO_2$) ou encore en mode co-électrolyse, c'est-à-dire avec un mélange de gaz en entrée cathodique composé de vapeur d'eau ($H_2O$) et de gaz carbonique ($CO_2$). Le mélange en sortie cathodique est alors composé d'hydrogène ($H_2$), de vapeur d'eau ($H_2O$), de monoxyde de carbone (CO) et de gaz carbonique ($CO_2$). En se référant à la figure 4, une cellule électrochimique constitutive d'une pile SOFC comprend les mêmes éléments (anode 12, cathode 14, électrolyte 16) qu'une cellule d'électrolyseur, la cellule de la pile étant cependant alimentée, avec des débits constants, sur son anode par du dihydrogène et sur sa cathode par du dioxygène, et connectée à une charge C pour délivrer le courant électrique produit. Au regard du courant électrique produit, de plusieurs ampères, la pile connait donc les mêmes problèmes que l'électrolyseur.

Une solution serait de protéger une tige de cuivre (ou tout autre métal jugé approprié en termes de résistivité électrique) par un revêtement pour lui conférer une bonne résistance à l'oxydation, par exemple un revêtement de chromine ou d'alumine. Cela pose plusieurs problèmes. Tout d'abord, il faut garantir l'étanchéité du revêtement et sa tenue sur le substrat cuivre lors du chauffage. Il faut souligner que le cuivre ayant un coefficient de dilatation thermique élevé, de fortes contraintes de dilatation thermique différentielle peuvent apparaître et endommager le revêtement et/ou l'interface revêtement/cuivre. En outre, à l'extrémité chaude de la tige, il est nécessaire de réaliser une connexion électrique avec le stack sans exposer le cuivre. La connexion doit donc être faite sur le revêtement, sans endommager celui-ci, ce qui est techniquement difficile.

Une autre solution est d'enrober la tige en cuivre dans une gaine en matériau résistant à l'oxydation. De cette façon, le problème de résistance aux contraintes de dilatation thermique différentielle est résolu puisque les deux matériaux ne sont pas solidaires. Un tel assemblage (cuivre + gaine inoxydable) est déjà connu de l'état de la technique pour d'autres domaines d'application (e.g. un environnement d'acide fort à faible température, 50-80°C), notamment du document chinois CN 202608143 U qui décrit une barre en cuivre qui est simplement enfilée dans un tube en acier. Ce type de conducteur donne satisfaction à basse température et avec une faible température, mais il a été observé qu'il ne convenait pas en l'état pour les systèmes à oxyde solide. En effet, le faible contact entre âme conductrice et gaine a pour conséquence, vue la forte température, la détérioration du contact électrique entre les deux matériaux et une augmentation des pertes ohmiques. En d'autres termes, il n'existe pas dans l'état de la technique de système optimisé de conduction électrique adapté à un fort courant électrique et supportant un cyclage thermique important en environnement oxydant.

On connaît de la demande de brevet FR 3 036 840 A1 un conducteur électrique adapté à des courants de plusieurs centaines d'ampères, résistant à l'oxydation à haute température et supportant le cyclage thermique jusqu'à 900°C. Ce conducteur électrique comprend une tige en un premier matériau métallique et une gaine, recouvrant entièrement la tige, en un deuxième matériau métallique, les deux étant soudées l'une à l'autre à l'aide d'une compression isostatique à chaud (CIC).

Plus précisément, cette demande propose de mettre en forme une tige composée d'un noyau en rond de cuivre protégé par une gaine en tube d'acier de type Inconel® 600, avec une pièce nommée « sifflet » en acier de type Inconel 600® qui est la borne de raccordement, et un embout de fermeture également en acier de type Inconel® 600 par lequel on tire au vide. L'assemblage de ces pièces se fait par soudage à l'arc de type TIG (pour « Tungsten Inert Gas » en anglais). La canne obtenue passe ensuite dans un procédé de compression isostatique à chaud (CIC), qui permet, sans ajout de métal d'apport, de réaliser un soudage par diffusion des différents matériaux entre eux.

Cette solution présente toutefois plusieurs inconvénients, et notamment l'usage de la compression isostatique à chaud (CIC) qui constitue un procédé onéreux et qui ne peut être réalisé que par des entreprises spécifiques, compte-tenu d'un cycle en température et haute pression de l'ordre de 900°C et 1000 bar, avec un temps de cycle de quelques heures.

En outre, la canne d'amenée de courant, ou « bus-barre », est constituée d'une seule plage de connexion à haute température, ce qui ne permet pas de réaliser des connexions internes à la zone de haute température.

## EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un conducteur électrique souple tel que défini dans la revendication 1, comportant :

- un ensemble comprenant :
- une âme conductrice souple constituée d'un premier matériau métallique,
- une gaine recouvrant l'âme conductrice et constituée d'un deuxième matériau métallique, notamment inoxydable ou réfractaire, de résistivité électrique supérieure à la résistivité électrique du premier matériau métallique,
- une première patte de raccordement constituée au moins en partie par le deuxième matériau métallique et raccordée à une première extrémité de l'ensemble,

où, au niveau de la première extrémité de l'ensemble, la gaine et la première patte de raccordement sont soudées par le biais d'un soudage TIG (acronyme de « Tungsten Inert Gas » en anglais), en particulier sur toute la circonférence, et l'âme conductrice et la première patte de raccordement sont soudées par soudo-brasure ou brasure, notamment une soudo-brasure ou brasure haute température.

La gaine et la première patte de raccordement peuvent être soudées par le biais d'un soudage TIG avec préférentiellement un apport de matière composée du deuxième matériau métallique. Toutefois, l'apport de matière pourrait également se faire par un métal inoxydable ou réfractaire, et/ou par des alliages métalliques ou réfractaires, notamment en acier inoxydable ou réfractaire. Le matériau d'apport est avantageusement résistant à l'oxydation à haute température et compatible avec les matériaux utilisés pour la gaine et la patte de raccordement.

Par conducteur électrique « souple », on entend un conducteur utilisé pour la connexion à l'empilement ou stack, apte à éviter la transmission de vibrations, dilatations et autres mouvements parasites entre le stack et son environnement (par exemple la sole du four, le châssis, les canalisations de gaz,...) et permettant de réaliser une connexion électrique éventuelle entre stacks lors du montage sans transition mécanique, par opposition à un conducteur électrique « rigide » agissant mécaniquement au sein d'une liaison principale et non directement connecté à un empilement ou stack. Un conducteur électrique souple permet par sa souplesse de faciliter le câblage principalement au niveau du stack. Il permet aussi de s'adapter à des formes différentes. Pour un conducteur électrique souple, le moment de force, ou couple, de mise en forme est inférieur à 2 N.m alors que pour un conducteur électrique rigide, il est supérieur à 10 N.m.

Le conducteur électrique selon l'invention peut en outre comporter l'une ou plusieurs des caractéristiques suivantes prises isolément ou suivant toutes combinaisons techniques possibles.

Avantageusement, le conducteur électrique peut comporter une deuxième patte de raccordement constituée au moins en partie par le deuxième matériau métallique et raccordée à une deuxième extrémité de l'ensemble. Au niveau de la deuxième extrémité de l'ensemble, la gaine et la deuxième patte de raccordement peuvent être soudées par le biais d'un soudage TIG, notamment avec un apport de matière composée du deuxième matériau métallique, et l'âme conductrice et la deuxième patte de raccordement peuvent être soudées par soudo-brasure ou brasure. Les soudages TIG aux deux extrémités de l'ensemble et la gaine peuvent recouvrir entièrement l'âme conductrice sur toute sa longueur.

Par ailleurs, au moins un jeu peut être présent entre la surface externe de l'âme conductrice et la surface interne de la gaine sur au moins une partie de la longueur de l'âme conductrice.

L'âme conductrice, premier matériau métallique, peut être constituée de cuivre, de nickel ou d'argent et/ou d'alliages de cuivre, de nickel ou d'argent, ou tout autre métal ou alliage bon conducteur électrique. En particulier, tout autre métal ou alliage bon conducteur électrique sensible à l'oxydation à haute température, de l'ordre de 900°C, tel que par exemple le laiton ou le bronze.

De plus, la gaine, deuxième matériau métallique, peut être constituée en métal inoxydable ou réfractaire et/ou en alliages métalliques ou réfractaires, notamment en acier inoxydable ou réfractaire, par exemple à base de nickel, chrome ou cobalt, notamment en Inconel®, par exemple en Inconel® 600 ou 625, ou tout autre métal ou alliage résistant à l'oxydation à haute température, par exemple l'inox 316L.

La première patte de raccordement et/ou la deuxième patte de raccordement peuvent être constituées entièrement du deuxième matériau métallique.

En variante, afin de limiter d'éventuelles pertes électriques, la première patte de raccordement et/ou la deuxième patte de raccordement peuvent comporter chacune un noyau conducteur de raccordement constitué du premier matériau métallique, et une gaine de raccordement recouvrant entièrement le noyau de raccordement sur toute sa longueur et constituée du deuxième matériau métallique.

La gaine de raccordement peut présenter une épaisseur de l'ordre de 0,5 mm.

Selon un mode de réalisation particulier visant notamment à l'obtention d'un câble de puissance souple et isolé électriquement, l'ensemble comprenant l'âme conductrice et la gaine peut être souple, en particulier l'âme conductrice et la gaine étant réalisées en un matériau souple et la gaine étant recouverte entièrement par une enveloppe isolante électrique, ou protection isolante électrique, notamment une enveloppe tressée en céramique.

Par ailleurs, l'invention a également pour objet, selon un autre de ses aspects, un procédé de fabrication d'un conducteur électrique tel que défini précédemment (voir revendication 8), le procédé comportant les étapes suivantes :

- nettoyage des surfaces, notamment au moyen d'un détergent et/ou d'un solvant, en particulier des surfaces destinées à être soudées, à savoir les surfaces de conduction électrique et les surfaces nécessaires à l'étanchéité du conducteur électrique,
- insertion de l'âme conductrice dans la gaine,
- soudage par soudo-brasure ou brasure entre l'âme conductrice et la première patte de raccordement,
- soudage par soudure TIG entre la gaine et la première patte de raccordement,
- éventuellement, mise sous vide de la gaine par pompage.

Le conducteur électrique peut comporter une deuxième patte de raccordement constituée au moins en partie par le deuxième matériau métallique et raccordée à une deuxième extrémité de l'ensemble, et le procédé peut comporter, après l'étape de soudage par soudure TIG entre la gaine et la première patte de raccordement, les étapes suivantes :

- soudage par soudo-brasure ou brasure entre l'âme conductrice et la deuxième patte de raccordement,
- soudage par soudure TIG entre la gaine et la deuxième patte de raccordement.

La fabrication peut être réalisée sous atmosphère ambiante (air) ou sous atmosphère neutre, par exemple de type argon.

La première patte de raccordement et/ou la deuxième patte de raccordement peuvent être formées par assemblage d'un noyau conducteur de raccordement et d'une gaine de raccordement recouvrant entièrement le noyau de raccordement. Le noyau de raccordement peut être fabriqué par matriçage. Toutefois, d'autres procédés que le matriçage pourraient être utilisés, comme l'usinage ou le forgeage. La gaine de raccordement peut être fabriquée par emboutissage ou assemblage de plusieurs pièces constituées par le deuxième matériau métallique.

Par ailleurs, l'assemblage de la première patte de raccordement et/ou de la deuxième patte de raccordement peuvent comporter au moins les étapes suivantes :

- nettoyage des éléments constitutifs de la patte de raccordement, notamment à l'aide d'un détergent ou d'un solvant,
- insertion du noyau de raccordement dans la gaine de raccordement,
- mise au vide de la patte de raccordement,
- application d'un cycle de soudage diffusion par Compression Isostatique à Chaud (CIC).

Le cycle de soudage diffusion par Compression Isostatique à Chaud (CIC) peut être réalisé avec les conditions opératoires suivantes :

- porter l'ensemble formé du noyau de raccordement et de la gaine de raccordement à une température comprise entre 600°C et 1060°C, de préférence entre 800°C et 1000°C, notamment une température de 920°C,
- appliquer sur la gaine de raccordement une pression comprise entre 500 bars et 1500 bars, de préférence entre 800 bars et 1200 bars, notamment une pression de 1020 bars,
- appliquer un palier de pression et température d'une durée de 30 minutes à plusieurs heures, de préférence 1 heure à 3 heures, notamment 2 heures,
- laisser refroidir l'ensemble et dépressuriser.

En outre, afin de garantir une bonne conductivité électrique, l'âme conductrice et le noyau de raccordement de la première patte de raccordement et/ou de la deuxième patte de raccordement peuvent être raccordés ensemble par un procédé de soudo-brasage ou de brasage à haute température.

En outre, l'invention a encore pour objet, selon un autre de ses aspects, l'utilisation d'au moins un conducteur électrique tel que défini précédemment, comme conducteur électrique d'un système électrochimique (voir revendication 14) comportant :

- une enceinte pour la circulation d'air dans le volume délimité par celle-ci,
- un dispositif électrochimique logé dans l'enceinte, comprenant :
- un empilement, à oxydes solides de type SOEC/SOFC fonctionnant à haute température, de cellules électrochimiques élémentaires comprenant chacune un électrolyte intercalé entre une cathode et une anode et connectées en série entre deux bornes électriques, et

- ledit au moins un conducteur électrique connecté à au moins une des deux bornes électriques.

De plus, l'invention a encore pour objet, selon un autre de ses aspects, un système électrochimique (voir revendication 15) comportant :

- une enceinte pour la circulation d'air dans le volume délimité par celle-ci,
- un dispositif électrochimique logé dans l'enceinte, comprenant :
- un empilement, à oxydes solides de type SOEC/SOFC fonctionnant à haute température, de cellules électrochimiques élémentaires comprenant chacune un électrolyte intercalé entre une cathode et une anode et connectées en série entre deux bornes électriques, et
- au moins un conducteur électrique tel que défini précédemment, connecté à au moins une des deux bornes électriques.

## BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :

[Fig. 1] est une vue schématique d'une cellule électrochimique élémentaire d'un électrolyseur EVHT,
[Fig. 2] est une vue schématique d'un empilement de cellules selon [Fig. 1],
[Fig. 3] est une vue schématique d'un système incorporant un empilement selon [Fig. 2],
[Fig. 4] est une vue schématique d'une cellule électrochimique d'une pile SOFC,
[Fig. 5] est une vue schématique d'un conducteur électrique souple conforme à l'invention ,
[Fig. 6] est une vue schématique en coupe selon le plan VI-VI de [Fig. 5],
[Fig. 7] est une vue schématique d'un autre conducteur électrique souple conforme à l'invention,
[Fig. 8] est une vue schématique en coupe selon le plan VIII-VIII de [Fig. 7],
[Fig. 9] est une vue agrandie selon A de [Fig. 8],
[Fig. 10] est une vue en perspective et éclatée d'une patte de raccordement du conducteur électrique de [Fig. 7],
[Fig. 11] est une vue en perspective assemblée d'une patte de raccordement du conducteur électrique de [Fig. 7].

Dans l'ensemble de ces figures, des références identiques peuvent désigner des éléments identiques ou analogues.
De plus, les différentes parties représentées sur les figures ne le sont pas nécessairement selon une échelle uniforme, pour rendre les figures plus lisibles.

## DESCRIPTION DÉTAILLÉE DES MODES DE RÉALISATION

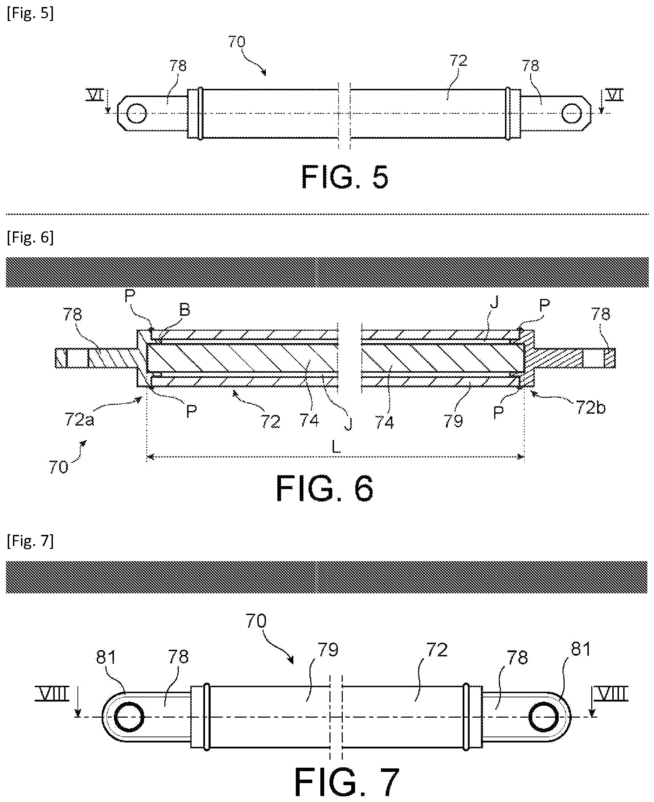

Les figures 1 à 4 ont déjà été décrites précédemment dans la partie relative à l'état de la technique antérieure et au contexte technique de l'invention.
En référence aux figures 5 à 11, des exemples de conducteurs électriques souples 70 sous la forme de câbles de puissance souples sont représentés. Une telle connexion souple permet par exemple de faciliter le câblage, absorber des dilatations ou des vibrations, entre autres.
En référence aux figures 5 et 6, un exemple de conducteur électrique souple 70 conforme à l'invention est décrit. Il comporte ainsi un ensemble 72 composé d'une âme conductrice 74 en un premier matériau métallique, ici du cuivre, insérée dans une gaine 79, en un deuxième matériau métallique, ici en alliage inoxydable, de résistivité électrique supérieure à la résistivité électrique du premier matériau métallique.
Il est à noter que l'âme conductrice 74 est ici en cuivre mais l'invention s'applique à d'autres métaux bons conducteurs électriques mais sensibles à l'oxydation, par exemple le nickel, l'argent, le laiton, le bronze et/ou des alliages de cuivre, tels que ceux durcis par dispersoïdes.
De plus, le conducteur électrique 70 comporte une première patte de raccordement 78 constituée du deuxième matériau métallique et raccordée à une première extrémité 72a de l'ensemble 72, et une deuxième patte de raccordement 78 constituée du deuxième matériau métallique et raccordée à une deuxième extrémité 72b de l'ensemble 72.
Les pattes de raccordement 78, ou « sifflets », ici en alliage inoxydable de type Inconel®, obstruent hermétiquement les extrémités 72a et 72b de l'ensemble 72, et évitent ainsi le passage de gaz. Elles permettent de réaliser les bornes de raccordement électrique. Elles ont une forme complémentaire de la plaque de l'électrolyseur sur laquelle les pattes 78 sont fixées pour la connexion électrique de l'électrolyseur.
La forme ou géométrie des pattes de raccordement 78 peut être la forme usuelle d'une cosse, comme représentée ici, ou toute autre forme différente, par exemple cylindrique et destinée à entrer dans un perçage ou serrée entre deux demi-coquilles solidaires du dispositif à alimenter.

Au niveau de la première extrémité 72a de l'ensemble 72, la gaine 79 et la première patte de raccordement 78 sont soudées par le biais d'un soudage TIG sur toute la circonférence, représenté par P sur la figure 6, par exemple une soudure orbitale, avec un apport de matière préférentiellement composée du deuxième matériau métallique. L'âme conductrice 74 et la première patte de raccordement 78 sont quant à elles soudées par soudo-brasure ou brasure, représentée par B sur la figure 6. Il n'y a pas de soudage entre l'âme conductrice 74 et la gaine 79.

De même, au niveau de la deuxième extrémité 72b de l'ensemble 72, la gaine 79 et la deuxième patte de raccordement 78 sont soudées par le biais d'un soudage TIG (référence P) avec un apport de matière préférentiellement composée du deuxième matériau métallique. L'âme conductrice 74 et la deuxième patte de raccordement 78 sont quant à elles soudées par soudo-brasure ou brasure (référence B). Les soudages TIG aux deux extrémités 72a et 72b de l'ensemble 72 et la gaine 79 recouvrent entièrement l'âme conductrice 74 sur toute sa longueur L, comme visible sur la figure 6. Il n'y a pas de soudage entre l'âme conductrice 74 et la gaine 79. Le soudage TIG permet de protéger l'âme conductrice 74 de l'oxydation. En effet, la soudure est réalisée de manière à rendre étanche les connexions entre les sifflets 78 et la gaine 79.

Comme représenté schématiquement sur la figure 6, un ou plusieurs jeux J peuvent être présents entre la surface externe de l'âme conductrice 74 et la surface interne de la gaine 79 sur au moins une partie de la longueur L de l'âme conductrice 74. En particulier, de l'atmosphère peut être emprisonnée entre l'âme conductrice 74 et la gaine 79, par exemple de l'air, ou une atmosphère d'inertage, par exemple de l'argon.

Dans le cas d'air emprisonné entre la gaine 79 et l'âme conductrice 74, lors de l'utilisation, en particulier en haute température, cet air va être consommé par l'oxydation du cuivre et celle de l'Inconel®, mais le volume étant faible et non renouvelable (étanchéité des soudures), la couche d'oxydation restera très faible. Dans le cas d'une atmosphère neutre, par exemple avec un balayage à l'argon, on peut éviter la formation de la couche d'oxydation.

Il est également possible de tirer au vide l'ensemble 72 par le biais d'un tube ajouté à cet effet. Un tube de dégazage est alors ajouté à une extrémité et la mise sous vide de la gaine est réalisée par pompage via le tube. Un queusotage peut ensuite être réalisé afin de maintenir définitivement le vide, permettant d'obturer le tube de manière hermétique et définitive. Une telle étape de mise au vide peut également permettre de réaliser un contrôle de l'étanchéité.

L'alliage inoxydable de la gaine 79 et des pattes de raccordement 78 est choisi en fonction des contraintes thermiques auxquelles est exposé le conducteur électrique 70. Notamment, pour une gamme de température jusqu'à 900°C, la gaine 79 et les pattes 78 peuvent être réalisées en Inconel® 600. L'âme conductrice 74 peut présenter un diamètre d'une dizaine de millimètres. Toutefois, la section peut être modifiée en fonction des besoins, par exemple en termes de courant, de chute de tension, etc. L'âme conductrice 74 peut également être composée, pour tout ou partie, d'un ou plusieurs câbles mutlmibrins, par exemple composé d'une tresse multibrins.

L'invention se propose ainsi de mettre en forme une âme 74 composée d'une âme (ou « cœur », ou « noyau ») en cuivre (ou tout autre métal jugé satisfaisant en termes de résistivité électrique) protégée par une gaine 79 en métal inoxydable ou réfractaire, en particulier en acier inoxydable ou alliage de nickel inoxydable, le tout soudé grâce au soudage TIG avec la présence de deux pattes de raccordement 78. L'invention peut donc ainsi être mise en œuvre sans l'utilisation d'un procédé de Compression Isostatique à Chaud (CIC) pour permettre l'assemblage entre âme 74, gaine 79 et pattes de raccordement 78.

Avantageusement, l'invention peut donc permettre un coût de fabrication réduit, et aussi une simplicité de fabrication permettant même la mise en forme et en longueur directement sur le site d'utilisation (mise en forme, coupe à la longueur, soudure des sifflets). Le conducteur électrique 70 peut être utilisé entièrement en zone haute température et aussi en traversée de cloison permettant le lien entre la zone de haute température et la zone de température ambiante.

Le procédé de fabrication d'un tel conducteur électrique 70, destiné à être utilisé en tant que conducteur électrique pour l'amenée d'un courant dans un système électrochimique, par exemple celui des figures 1 à 4, comporte par exemple les étapes suivantes :

- fabriquer les pièces précédemment décrites (âme, gaine, pattes),
- nettoyage des pièces et notamment des surfaces destinées à être soudées, à savoir les surfaces de conduction électrique et les surfaces nécessaires à l'étanchéité du conducteur électrique, au moyen d'un détergent et/ou d'un solvant, ou tout autre moyen,
- insertion de l'âme conductrice 74 dans la gaine 79,
- soudage par soudo-brasure ou brasure entre l'âme conductrice 74 et la première patte de raccordement 78,
- soudage par soudure TIG entre la gaine 79 et la première patte de raccordement 78,
- soudage par soudo-brasure ou brasure entre l'âme conductrice 74 et la deuxième patte de raccordement 78,
- soudage par soudure TIG entre la gaine 79 et la deuxième patte de raccordement 78,
- le cas échéant, si nécessaire, mise sous vide de la gaine 79 par pompage.

De plus, une étape de radiographie des soudures peut être réalisée afin de confirmer la qualité des soudures d'un point de vue mécanique, électrique et d'étanchéité.

Les extrémités pourvues des pattes 78 sont des extrémités chaudes pouvant être percées, comme visible sur les figures 5 et 6, perpendiculairement à l'axe de la gaine 79, pour être vissées sur le stack.

Les soudures TIG sont avantageusement réalisées par un Homme du métier, notamment pour la soudure entre le cuivre et l'Inconel® afin de s'assurer de l'obtention d'une bonne connexion électrique, et pour la soudure entre l'Inconel® et l'Inconel® afin de s'assurer de l'obtention d'une soudure étanche.

En comparant la résistance obtenue pour un conducteur électrique 70 d'1 m, dans le Tableau 1 ci-dessous, dans le cas d'un conducteur électrique 70 de diamètre de 12 mm réalisé entièrement en Inconel® 600 (réalisation selon l'art antérieur) et dans le cas d'un conducteur électrique 70 de diamètre 12 mm réalisé avec une gaine 79 en Inconel® 600 et un noyau 74 en cuivre (réalisation conforme à l'invention), on constate que l'invention permet de réduire les pertes électriques d'un facteur 10, à la température d'utilisation de 800°C.

[Table 1]

| Température (°C) | Résistance conducteur 70 Inconel® 600 ($\Omega$) | Résistance conducteur 70 Inconel® 600 + cuivre ($\Omega$) |
|---|---|---|
| 20 | $9,1.10^{-3}$ | $0,21.10^{-3}$ |

*Tableau 1*

| 800 | $10.10^{-3}$ | $0,87.10^{-3}$ |
|---|---|---|

Pour les résultats de ce Tableau 1, la résistivité du cuivre est de $17,24.10^{-9}\ \Omega.m$ à froid (20°C) et de $70.10^{-9}\ \Omega.m$ à 800°C. La résistivité de l'Inconel® 600 est de $1,03.10^{-6}\ \Omega.m$ à froid (20°C) et de $1,13.10^{-6}\ \Omega.m$ à 800°C.

Le conducteur électrique 70 obtenu selon le principe de l'invention est un ainsi un conducteur électrique adapté à la haute température et au courant élevé des empilements de cellules à oxydes solides de type SOEC/SOFC. Toutefois, des pertes électriques peuvent avoir lieu dans les pattes de raccordement 78 et il est possible de modifier la conception de ces pattes de raccordement 78 afin de limiter ces pertes.

Les figures 7 à 11 sont relatives à un autre mode de réalisation d'un conducteur électrique 70 conforme à l'invention dans lequel les pattes de raccordement 78 sont de conception différente, étant qualifiées alors de pattes de raccordement 78 ou sifflets 78 « haute conductivité ».

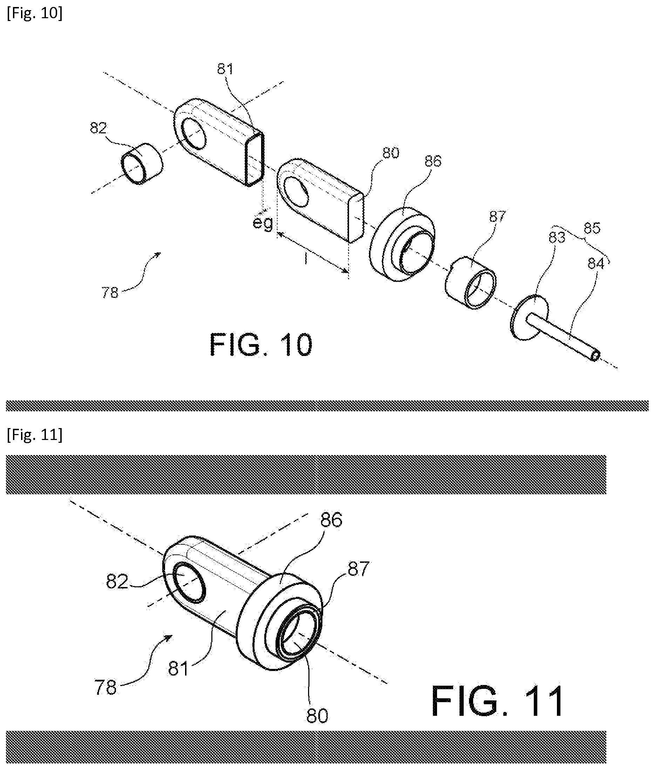

Précisément, la première patte de raccordement 78 et la deuxième patte de raccordement 78 comportent chacune un noyau conducteur de raccordement 80 constitué du premier matériau métallique, ici le cuivre mais tout autre métal précédemment décrit est possible, et une gaine de raccordement 81 recouvrant entièrement le noyau de raccordement 80 sur toute sa longueur l, comme visible sur la figure 10, et constituée du deuxième matériau métallique, ici l'Inconel® 600 mais tout autre métal précédemment décrit est possible. Avantageusement, la gaine de raccordement 81 présente une épaisseur $e_g$, visible sur la figure 10, qui est de l'ordre de 0,5 mm. Obtenir une faible épaisseur $e_g$ contribue significativement à la réduction des pertes électriques.

De plus, chaque patte de raccordement 78 comporte un tube formant chemise 82 inséré dans des perçages correspondants du noyau de raccordement 80 et de la gaine de raccordement 81 pour permettre la fixation au stack, comme visible sur les figures 10 et 11.

La patte de raccordement 78 obtenue, telle que représentée sur les figures 10 et 11, permet de réduire les pertes électriques dans celle-ci par le remplacement d'une partie du deuxième matériau métallique par le premier matériau métallique présentant une bonne conductivité. En effet, en conservant une gaine de raccordement 81 en Inconel® pour protéger le noyau de raccordement 80 en cuivre de l'oxydation, il est possible de réduire les pertes électriques du sifflet 78. Par contre, un tel sifflet 78 étant le lieu de connexion, une continuité électrique sur l'ensemble de la surface de connexion est nécessaire entre la gaine de raccordement 81 et le noyau de raccordement 80. Pour cela, la méthode de fabrication d'un tel sifflet 78, décrite par la suite, utilise le procédé de Compression Isostatique à Chaud (CIC), utilisé dans l'invention uniquement pour la fabrication de tels sifflets 78 « haute conductivité », afin de garantir une soudure sur l'ensemble de surface de connexion entre le noyau de raccordement 80 et la gaine de raccordement 81.

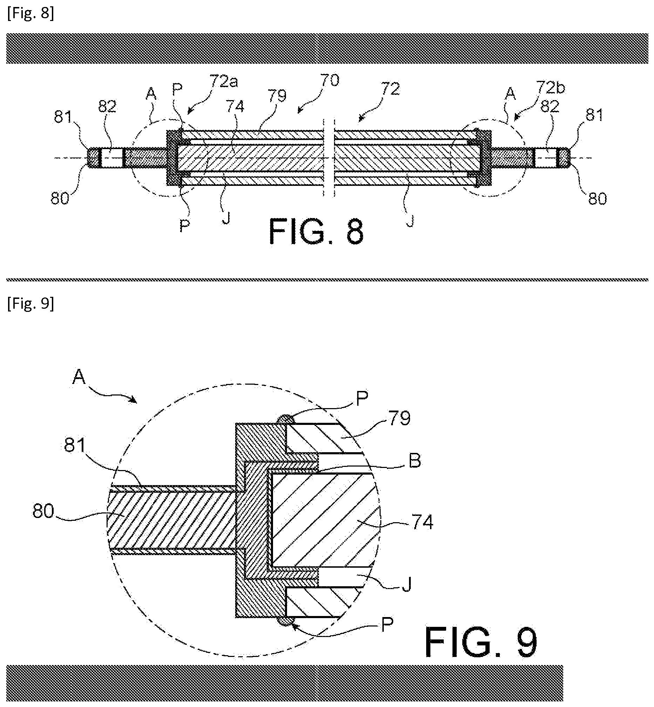

Le conducteur électrique 70 du mode de réalisation des figures 7 et 8 présente donc une meilleure conductivité que celui décrit en référence aux figures 5 et 6, grâce à l'utilisation de pattes de raccordement 78 « haute conductivité ». Précisément, une patte de raccordement 78 « haute conductivité » peut présenter une résistivité de seulement une dizaine de pourcents par rapport à une patte de raccordement 78 entièrement réalisée en le deuxième matériau métallique.

Pour la fabrication des pattes de raccordement 78 « haute conductivité », le noyau de raccordement 80 peut être obtenu par matriçage. La forge par matriçage consiste à former par déformation plastique après chauffage des pièces brutes réalisées en alliages, tels que les alliages d'aluminium, de cuivre, de titane, de nickel, etc. Le matriçage des aciers est encore dénommé « estampage ». Le matriçage est une opération de forge effectuée à l'aide d'outillages appelés « matrices », notamment des demi-matrices supérieure et inférieure. Celles-ci portent en creux la forme de la pièce à fabriquer.

Par ailleurs, la gaine de raccordement 81 peut être obtenue par emboutissage ou assemblage de plusieurs pièces constituées par le deuxième matériau métallique. Cette technique de fabrication par emboutissage permet d'obtenir, à partir d'une feuille de tôle plane, un objet dont la forme n'est pas développable. Cette technique est adaptée à une fabrication en série.

La gaine 79 est ici une gaine souple, par exemple réalisée en inox 321 de la gamme XS en DN16 de la société Kenovel. De plus, l'âme conductrice 74 souple est par exemple du cuivre multibrins en 70 mm$^2$.

En outre, de façon avantageuse, une enveloppe isolante électrique est ajoutée sur l'ensemble 72 formé, tel que décrit précédemment, notamment une enveloppe tressée en céramique de type Nefatex 1390 (gaine en alumine-silices de tenue diélectrique standard de 700 V à 1000°C). Une telle enveloppe isolante électrique n'est pas représentée sur les exemples décrits.

A noter que sur la figure 9 est représenté également le brasage B, réalisé entre la patte de raccordement 78 et l'âme conductrice 74. Une soudure TIG (référence P) est réalisée entre le sifflet 78 et la gaine souple 79 de sorte à assurer l'étanchéité.

Le procédé d'assemblage d'une patte de raccordement 78 « haute conductivité » ou sifflet « haute conductivité » comprend alors les étapes suivantes :

- nettoyage des pièces constitutives du sifflet 78, par exemple à l'aide de détergents, de solvants ou tout autre moyen approprié,
- insertion du noyau de raccordement 80 dans la gaine de raccordement 81,
- insertion du tube formant chemise 82, réalisé en le premier matériau métallique,
- soudure par soudage TIG entre la gaine de raccordement 81 et le tube formant chemise 82 pour rendre étanche les jonctions sur chaque face, optionnellement avec un apport de matière, notamment composé d'acier inoxydable,
- ajout des pièces 86 et 87 sur le noyau de raccordement 80 : la pièce 86 est constituée en le premier matériau et permet le maintien mécanique entre la gaine de raccordement 81 et la gaine souple 79, et la protection contre l'oxydation (continuité de l'étanchéité entre 81 et 79) ; la pièce 87 est constituée en le deuxième matériau et permet la connexion électrique entre le noyau de raccordement 80 et l'âme conductrice 74,
- ajout du capot de fermeture 85 formé par une plaque de fermeture 83 et un tube de queusotage 84, tels que représentés sur la figure 10,
- soudure par soudage TIG entre la gaine de raccordement 81 et le capot de fermeture 85 pour rendre étanche la jonction,
- mise au vide du sifflet 78, une pompe à vide étant raccordée sur le tube 84 de façon à réaliser le vide à l'intérieur de la gaine de raccordement 81, puis un queusotage du tube 84 est réalisé de façon à l'obturer de manière hermétique et définitive.

Par la suite, l'application d'un cycle de soudage diffusion par Compression Isostatique à Chaud (CIC) est réalisée avec les conditions opératoires suivantes :

- porter l'ensemble 78 formé entre autres du noyau de raccordement 80 et de la gaine de raccordement 81 à une température comprise entre 600°C et 1060°C, de préférence entre 800°C et 1000°C, notamment une température de 920°C,
- appliquer sur la gaine de raccordement 81 une pression comprise entre 500 bars et 1500 bars, de préférence entre 800 bars et 1200 bars, notamment une pression de 1020 bars,
- appliquer un palier de pression et température d'une durée de 30 minutes à plusieurs heures, de préférence 1 heure à 3 heures, notamment 2 heures,
- laisser refroidir l'ensemble et dépressuriser.

Enfin, chaque patte de raccordement « haute conductivité » 78 peut subir un usinage afin de permettre la connexion directement du noyau de raccordement 80, et on obtient un sifflet 78 tel que représenté sur la figure 11.

Les sifflets 78 « haute conductivité » obtenus sont ensuite connectés à l'ensemble 72 par une connexion de faible résistivité. En particulier, l'âme conductrice 74 et le noyau de raccordement 80 de chaque patte de raccordement 78 peuvent être raccordés par un soudo-brasage ou brasage haute température. On obtient ainsi une connexion électrique à forte conductivité. Le choix du métal d'apport peut permettre de garantir la connexion jusqu'aux températures d'utilisation maximales de l'ordre de 900°C. Le montage est réalisable par exemple avec la brasure du commerce Castolin® 146 et le décapant préconisé 146 M. Cette brasure est constituée de 60% en cuivre, 39% en zinc et 1% en étain-manganèse.

Ensuite, comme précédemment décrit, la connexion mécanique et l'étanchéité sont obtenues par soudure TIG, comme représenté sur la figure 8 au niveau du point P sur l'ensemble de la circonférence, avec apport de matière préférentiellement composé du deuxième matériau métallique. Une étape de mise au vide éventuelle peut être réalisée et une étape de radiographie des soudures et brasures peuvent aussi être mises en œuvre comme décrit précédemment.

L'invention peut être appliquée à un électrolyseur de vapeur d'eau à haute température, à un co-électrolyseur haute température alimenté avec un mélange de vapeur d'eau ($H_2O$) et de gaz carbonique ($CO_2$), à une pile à combustible à oxydes solides à haute température, à un système réversible, pile à combustible et électrolyseur haute température, aux pile ou électrolyseur « moyenne température », i.e. 400°C, ou encore PCFC pour « Proton Ceramic Fuel Cell » en anglais, tels que décrits précédemment.

L'invention s'applique aux systèmes précédemment décrits fonctionnant à pression atmosphérique mais aussi à des systèmes sous pression.

En dehors du domaine technique des systèmes électrochimiques à oxydes solides, l'invention s'applique à tous les domaines pour lesquels il y a un besoin de conduction électrique en milieu oxydant à haute température ou dans des conditions conduisant à la dégradation rapide des matériaux conducteurs de l'électricité.

**Revendications**

1. Conducteur électrique souple (70) comportant :

    - un ensemble (72) comprenant :

        - une âme conductrice souple (74) constituée d'un premier matériau métallique,
        - une gaine (79) recouvrant l'âme conductrice (74) et constituée d'un deuxième matériau métallique, de résistivité électrique supérieure à la résistivité électrique du premier matériau métallique,

    - une première patte de raccordement (78) raccordée à une première extrémité (72a) de l'ensemble (72),

    **caractérisé en ce que**,

    la première patte de raccordement (78) est constituée par le deuxième matériau métallique,
    et **en ce que** au niveau de la première extrémité (72a) de l'ensemble (72), la gaine (79) et la première patte de raccordement (78) sont soudées par le biais d'un soudage TIG, et l'âme conductrice (74) et la première patte de raccordement (78) sont soudées par soudo-brasure ou brasure.

2. Conducteur selon la revendication 1, **caractérisé en ce qu'**il comporte :

    - une deuxième patte de raccordement (78) constituée au moins en partie par le deuxième matériau métallique et raccordée à une deuxième extrémité (72b) de l'ensemble (72),

    et **en ce que**, au niveau de la deuxième extrémité (72b) de l'ensemble (72), la gaine (79) et la deuxième patte de raccordement (78) sont soudées par le biais d'un soudage TIG, et l'âme conductrice (74) et la deuxième patte de raccordement (78) sont soudées par soudo-brasure ou brasure, les soudages TIG aux deux extrémités (72a, 72b) de l'ensemble (72) et la gaine (79) recouvrant entièrement l'âme conductrice (74) sur toute sa longueur (L).

3. Conducteur selon la revendication 1 ou 2, **caractérisé en ce qu'**au moins un jeu (J) est présent entre la surface externe de l'âme conductrice (74) et la surface interne de la gaine (79) sur au moins une partie de la longueur (L) de l'âme conductrice (74).

4. Conducteur selon l'une des revendications précédentes, **caractérisé en ce que** l'âme conductrice (74) est constituée de cuivre, de nickel ou d'argent et/ou d'alliages de cuivre, de nickel ou d'argent.

5. Conducteur selon l'une quelconque des revendications précédentes, **caractérisé en ce que** la gaine (79) est constituée en métal inoxydable ou réfractaire et/ou en alliages métalliques ou réfractaires, notamment en acier inoxydable ou réfractaire.

**6.** Conducteur selon l'une quelconque des revendications précédentes, **caractérisé en ce que** la première patte de raccordement (78) et/ou la deuxième patte de raccordement (78) comporte chacune un noyau conducteur de raccordement (80) constitué du premier matériau métallique, et une gaine de raccordement (81) recouvrant entièrement le noyau de raccordement (80) sur toute sa longueur (I) et constituée du deuxième matériau métallique.

**7.** Conducteur selon l'une quelconque des revendications précédentes, **caractérisé en ce que** l'ensemble (72) comprenant l'âme conductrice (74) et la gaine (79) est recouvert entièrement par une enveloppe isolante électrique.

**8.** Procédé de fabrication d'un conducteur électrique (70) selon l'une quelconque des revendications précédentes, le procédé comportant les étapes suivantes :

- nettoyage des surfaces, notamment au moyen d'un détergent et/ou d'un solvant,
- insertion de l'âme conductrice (74) dans la gaine (79),
- soudage par soudo-brasure ou brasure entre l'âme conductrice (74) et la première patte de raccordement (78),
- soudage par soudure TIG entre la gaine (79) et la première patte de raccordement (78),
- éventuellement, mise sous vide de la gaine (79) par pompage.

**9.** Procédé selon la revendication 8, **caractérisé en ce que** le conducteur électrique (70) comporte une deuxième patte de raccordement (78) constituée au moins en partie par le deuxième matériau métallique et raccordée à une deuxième extrémité (72b) de l'ensemble (72), et **en ce que** le procédé comporte, après l'étape de soudage par soudure TIG entre la gaine (79) et la première patte de raccordement (78), les étapes suivantes :

- soudage par soudo-brasure ou brasure entre l'âme conductrice (74) et la deuxième patte de raccordement (78),
- soudage par soudure TIG entre la gaine (79) et la deuxième patte de raccordement (78).

**10.** Procédé selon la revendication 8 ou 9, **caractérisé en ce que** la première patte de raccordement (78) et/ou la deuxième patte de raccordement (78) sont formées par assemblage d'un noyau conducteur de raccordement (80) et d'une gaine de raccordement (81) recouvrant entièrement le noyau de raccordement (80), le noyau de raccordement (80) étant fabriqué par matriçage et la gaine de raccordement (81) étant fabriquée par emboutissage ou assemblage de plusieurs pièces constituées par le deuxième matériau métallique.

**11.** Procédé selon la revendication 10, **caractérisé en ce que** l'assemblage de la première patte de raccordement (78) et/ou de la deuxième patte de raccordement (78) comporte au moins les étapes suivantes :

- nettoyage des éléments constitutifs de la patte de raccordement (78), notamment à l'aide d'un détergent ou d'un solvant,
- insertion du noyau de raccordement (80) dans la gaine de raccordement (81),
- mise au vide de la patte de raccordement (78),
- application d'un cycle de soudage diffusion par Compression Isostatique à Chaud (CIC).

**12.** Procédé selon la revendication 11, **caractérisé en ce que** le cycle de soudage diffusion par Compression Isostatique à Chaud (CIC) est réalisé avec les conditions opératoires suivantes :

- porter l'ensemble formé du noyau de raccordement (80) et de la gaine de raccordement (81) à une température comprise entre 600°C et 1060°C, de préférence entre 800°C et 1000°C, notamment une température de 920°C,
- appliquer sur la gaine de raccordement (81) une pression comprise entre 500 bars et 1500 bars, de préférence entre 800 bars et 1200 bars, notamment une pression de 1020 bars,
- appliquer un palier de pression et température d'une durée de 30 minutes à plusieurs heures, de préférence 1 heure à 3 heures, notamment 2 heures,
- laisser refroidir l'ensemble et dépressuriser.

**13.** Procédé selon l'une quelconque des revendications 10 à 12, **caractérisé en ce que** l'âme conductrice (74) et le noyau de raccordement (80) de la première patte de raccordement (78) et/ou de la deuxième patte de raccordement (78) sont raccordés ensemble par un procédé de soudo-brasage ou de brasage à haute température.

**14.** Utilisation d'au moins un conducteur électrique (70) selon l'une quelconque des revendications 1 à 7, comme conducteur électrique d'un système électrochimique comportant :

- une enceinte (60) pour la circulation d'air dans le volume délimité par celle-ci,
- un dispositif électrochimique logé dans l'enceinte (60), comprenant :

- un empilement (20), à oxydes solides de type SOEC/SOFC fonctionnant à haute température, de cellules électrochimiques élémentaires (10) comprenant chacune un électrolyte (16) intercalé entre une cathode (12) et une anode (14) et connectées en série entre deux bornes électriques (30, 32), et
- ledit au moins un conducteur électrique (70) connecté à au moins une des deux bornes électriques (30, 32).

15. Système électrochimique comportant :

- une enceinte (60) pour la circulation d'air dans le volume délimité par celle-ci,
- un dispositif électrochimique logé dans l'enceinte (60), comprenant :

- un empilement (20), à oxydes solides de type SOEC/SOFC fonctionnant à haute température, de cellules électrochimiques élémentaires (10) comprenant chacune un électrolyte (16) intercalé entre une cathode (12) et une anode (14) et connectées en série entre deux bornes électriques (30, 32),

le système électrochimique étant **caractérisé en ce qu'**il comporte :

- au moins un conducteur électrique (70) selon l'une quelconque des revendications 1 à 7, connecté à au moins une des deux bornes électriques (30, 32).

**Patentansprüche**

1. Weicher elektrischer Leiter (70), der Folgendes aufweist:

- eine Baugruppe (72) umfassend:
- einen flexiblen Leitkern (74), der aus einem ersten Metallmaterial besteht,
- einen Mantel (79), der den Leitkern (74) bedeckt und aus einem zweiten Metallmaterial mit einem höheren elektrischen Widerstand als der elektrische Widerstand des ersten Metallmaterials besteht,
- eine erste Verbindungslasche (78), die mit einem ersten Ende (72a) der Baugruppe (72) verbunden ist,

**dadurch gekennzeichnet, dass**
die erste Verbindungslasche (78) aus dem zweiten Metallmaterial besteht, und dass an dem ersten Ende (72a) der Baugruppe (72) der Mantel (79) und die erste Verbindungslasche (78) mittels WIG-Schweißen verschweißt sind, und der Leitkern (74) und die erste Verbindungslasche (78) durch Lötschweißen oder Hartlöten verschweißt sind.

2. Leiter nach Anspruch 1, **dadurch gekennzeichnet, dass** er Folgendes aufweist:

- eine zweite Verbindungslasche (78), die mindestens teilweise aus dem zweiten Metallmaterial besteht und mit einem zweiten Ende (72b) der Baugruppe (72) verbunden ist,

und dass an dem zweiten Ende (72b) der Baugruppe (72) der Mantel (79) und die zweite Verbindungslasche (78) mittels WIG-Schweißen verschweißt sind, und der Leitkern (74) und die zweite Verbindungslasche (78) mittels Lötschweißen oder Hartlöten verschweißt sind, wobei die WIG-Schweißungen an beiden Enden (72a, 72b) der Baugruppe (72) und der Mantel (79) den Leitkern (74) über seine gesamte Länge (L) vollständig bedecken.

3. Leiter nach Anspruch 1 oder 2, **dadurch gekennzeichnet, dass** mindestens ein Spiel (J) zwischen der Außenfläche des Leitkerns (74) und der Innenfläche des Mantels (79) über mindestens einen Teil der Länge (L) des Leitkerns (74) vorhanden ist.

4. Leiter nach einem der vorhergehenden Ansprüche, **dadurch gekennzeichnet, dass** der Leitkern (74) aus Kupfer, Nickel oder Silber und/oder Kupfer-, Nickel- oder Silberlegierungen besteht.

5. Leiter nach einem der vorhergehenden Ansprüche, **dadurch gekennzeichnet, dass** der Mantel (79) aus Edelstahl oder feuerfestem Metall und/oder aus Metall- oder feuerfesten Legierungen, insbesondere aus Edelstahl oder feuerfestem Stahl, besteht.

**6.** Leiter nach einem der vorhergehenden Ansprüche, **dadurch gekennzeichnet, dass** die erste Verbindungslasche (78) und/oder die zweite Verbindungslasche (78) jeweils einen Verbindungsleitkern (80) aufweisen, der aus dem ersten Metallmaterial besteht, und einen Verbindungsmantel (81), der den Verbindungskern (80) auf seiner gesamten Länge vollständig bedeckt (I) und aus dem zweiten Metallmaterial besteht.

**7.** Leiter nach einem der vorhergehenden Ansprüche, **dadurch gekennzeichnet, dass** die Baugruppe (72), die den Leitkern (74) und den Mantel (79) umfasst, vollständig von einer elektrisch isolierenden Hülle abgedeckt ist.

**8.** Herstellungsverfahren eines elektrischen Leiters (70) nach einem der vorhergehenden Ansprüche, das folgende Schritte aufweist:

- Reinigen der Oberflächen, insbesondere mit einem Reinigungsmittel und/oder Lösungsmittel,
- Einführen des Leitkerns (74) in den Mantel (79),
- Schweißen durch Lötschweißen oder Hartlöten zwischen dem Leitkern (74) und der ersten Verbindungslasche (78),
- WIG-Schweißen zwischen dem Mantel (79) und der ersten Verbindungslasche (78),
- eventuelles Vakuumieren des Mantels (79) durch Pumpen.

**9.** Verfahren nach Anspruch 8, **dadurch gekennzeichnet, dass** der elektrische Leiter (70) eine zweite Verbindungslasche (78) aufweist, die mindestens teilweise aus dem zweiten Metallmaterial besteht und mit einem zweiten Ende (72b) der Baugruppe (72) verbunden ist, und dass das Verfahren nach dem Schritt des WIG-Schweißens zwischen dem Mantel (79) und der ersten Verbindungslasche (78) folgende Schritte aufweist:

- Schweißen durch Lötschweißen oder Hartlöten zwischen dem Leitkern (74) und der zweiten Verbindungslasche (78),
- WIG-Schweißen zwischen dem Mantel (79) und der zweiten Verbindungslasche (78).

**10.** Verfahren nach Anspruch 8 oder 9, **dadurch gekennzeichnet, dass** die erste Verbindungslasche (78) und/oder die zweite Verbindungslasche (78) durch Zusammenfügen eines Verbindungskerns (80) und eines Verbindungsmantels (81) gebildet werden, der den Verbindungskern (80) vollständig bedeckt, wobei der Verbindungskern (80) durch Matrizen-schmieden hergestellt wird und der Verbindungsmantel (81) hergestellt wird, indem mehrere Teile aus dem zweiten Metallmaterial gestanzt oder zusammengefügt werden.

**11.** Verfahren nach Anspruch 10, **dadurch gekennzeichnet, dass** das Zusammenfügen der ersten Verbindungslasche (78) und/oder der zweiten Verbindungslasche (78) mindestens die folgenden Schritte aufweist:

- Reinigen der Bestandteile der Verbindungslasche (78), insbesondere mit einem Reinigungsmittel oder Lösungsmittel,
- Einführen des Verbindungskerns (80) in den Verbindungsmantel (81),
- Evakuieren der Verbindungslasche (78),
- Anwenden eines Diffusionsschweißzyklus durch isostatische Warmkompression (CIC).

**12.** Verfahren nach Anspruch 11, **dadurch gekennzeichnet, dass** der Diffusionsschweißzyklus durch isostatische Warmkompression (CIC) unter folgenden Betriebsbedingungen durchgeführt wird:

- Bringen der aus dem Verbindungskern (80) und dem Verbindungsmantel (81) gebildeten Baugruppe auf eine Temperatur zwischen 600 °C und 1060 °C, vorzugsweise zwischen 800 °C und 1000 °C, insbesondere eine Temperatur von 920 °C,
- Ausüben eines Druck zwischen 500 bar und 1500 bar, vorzugsweise zwischen 800 bar und 1200 bar, insbesondere einen Druck von 1020 bar, auf den Verbindungsmantel (81),
- Anwenden einer Druck- und Temperaturstufe für eine Dauer von 30 Minuten bis zu mehreren Stunden, vorzugsweise 1 Stunde bis 3 Stunden, insbesondere 2 Stunden,
- Abkühlen der Baugruppe und Druck ablassen.

**13.** Verfahren nach einem der Ansprüche 10 bis 12, **dadurch gekennzeichnet, dass** der Leitkern (74) und der Verbindungskern (80) der ersten Verbindungslasche (78) und/oder der zweiten Verbindungslasche (78) durch ein Hochtemperaturlöt- oder Hochtemperaturhartlötverfahren miteinander verbunden sind.

**14.** Verwendung mindestens eines elektrischen Leiters (70) nach einem der Ansprüche 1 bis 7 als elektrischer Leiter eines elektrochemischen Systems, das Folgendes aufweist:

- ein Gehäuse (60) für die Luftzirkulation in dem von diesem begrenzten Volumen,
- eine elektrochemische Vorrichtung, die in dem Gehäuse (60) untergebracht ist, umfassend:

- einen Stapel (20), mit festen Oxiden des SOEC/SOFC-Typs, die bei hoher Temperatur arbeiten, von elementaren elektrochemischen Zellen (10), die jeweils einen Elektrolyten (16) umfassen, der zwischen eine Kathode (12) und eine Anode (14) eingelegt und in Reihe zwischen zwei elektrischen Klemmen (30, 32) geschaltet ist, und
- den mindestens einen elektrischen Leiter (70), der mit mindestens einer der beiden elektrischen Klemmen (30, 32) verbunden ist.

**15.** Elektrochemisches System, das Folgendes aufweist:

- ein Gehäuse (60) für die Luftzirkulation in dem von diesem begrenzten Volumen,
- eine elektrochemische Vorrichtung, die in dem Gehäuse (60) untergebracht ist, umfassend:

- einen Stapel (20), mit festen Oxiden des SOEC/SOFC-Typs, die bei hoher Temperatur arbeiten, von elementaren elektrochemischen Zellen (10), die jeweils einen Elektrolyten (16) umfassen, der zwischen eine Kathode (12) und eine Anode (14) eingelegt und in Reihe zwischen zwei elektrischen Klemmen (30, 32) geschaltet ist, wobei das elektrochemische System **dadurch gekennzeichnet ist, dass** es Folgendes aufweist:

- mindestens einen elektrischen Leiter (70) nach einem der Ansprüche 1 bis 7, der mit mindestens einer der beiden elektrischen Klemmen (30, 32) verbunden ist.

## Claims

**1.** Flexible electrical conductor (70) comprising:

- an assembly (72) comprising:

- a flexible conductive core (74) made of a first metal material,
- a sheath (79) covering the conductive core (74) and made of a second metal material having an electrical resistivity higher than the electrical resistivity of the first metal material,
- a first connection strip (78) connected to a first end (72a) of the assembly (72),

**characterised in that** the first connection strip (78) is made of the second metal material, and **in that**, at the first end (72a) of the assembly (72), the sheath (79) and the first connection strip (78) are bonded by TIG welding, and the conductive core (74) and the first connection strip (78) are bonded by braze-welding or brazing.

**2.** Conductor according to Claim 1, **characterised in that** it comprises:

- a second connection strip (78) made at least in part of the second metal material and connected to a second end (72b) of the assembly (72),

and **in that**, at the second end (72b) of the assembly (72), the sheath (79) and the second connection strip (78) are bonded by TIG welding, and the conductive core (74) and the second connection strip (78) are bonded by braze-welding or brazing, the TIG welds at the two ends (72a, 72b) of the assembly (72) and the sheath (79) completely covering the conductive core (74) over its entire length (L).

**3.** Conductor according to Claim 1 or 2, **characterised in that** at least one gap (J) is present between the outer surface of the conductive core (74) and the inner surface of the sheath (79) over at least part of the length (L) of the conductive core (74).

**4.** Conductor according to one of the preceding claims, **characterised in that** the conductive core (74) is made of copper, nickel or silver and/or copper, nickel or silver alloys.

5. Conductor according to one of the preceding claims, **characterised in that** the sheath (79) is made of stainless or refractory metal and/or metal or refractory alloys, in particular stainless or refractory steel.

6. Conductor according to one of the preceding claims, **characterised in that** the first connection strip (78) and/or the second connection strip (78) each has a conductive connection core (80) made of the first metal material, and a connection sheath (81) completely covering the connection core (80) over its entire length (l) and made of the second metal material.

7. Conductor according to one of the preceding claims, **characterised in that** the assembly (72) comprising the conductive core (74) and the sheath (79) is completely covered by an electrically insulating jacket.

8. Method for manufacturing an electrical conductor (70) according to one of the preceding claims, the method comprising the following steps:

   - cleaning the surfaces, in particular using a detergent and/or a solvent,
   - inserting the conductive core (74) into the sheath (79),
   - bonding the conductive core (74) to the first connection strip (78) by braze-welding or brazing,
   - bonding the sheath (79) to the first connection strip (78) by TIG welding,
   - optionally, evacuating the sheath (79) by pumping.

9. Method according to Claim 8, **characterised in that** the electrical conductor (70) comprises a second connection strip (78) made at least in part of the second metal material and connected to a second end (72b) of the assembly (72), and **in that** the method comprises, after the step of bonding the sheath (79) to the first connection strip (78) by TIG welding, the following steps:

   - bonding the conductive core (74) to the second connection strip (78) by braze-welding or brazing,
   - bonding the sheath (79) to the second connection strip (78) by TIG welding.

10. . Method according to Claim 8 or 9, **characterised in that** the first connection strip (78) and/or the second connection strip (78) are formed by assembling a conductive connection core (80) and a connection sheath (81) completely covering the connection core (80), the connection core (80) being manufactured by die-forging and the connection sheath (81) being manufactured by deep-drawing or by assembling a plurality of parts made of the second metal material.

11. Method according to Claim 10, **characterised in that** assembling the first connection strip (78) and/or the second connection strip (78) comprises at least the following steps:

   - cleaning the constituent elements of the connection strip (78), in particular using a detergent or a solvent,
   - inserting the connection core (80) into the connection sheath (81),
   - evacuating the connection strip (78),
   - applying a diffusion welding cycle by hot isostatic pressing (HIP).

12. Method according to Claim 11, **characterised in that** the diffusion welding cycle by hot isostatic pressing (HIP) is carried out with the following operating conditions:

   - heating the assembly formed by the connection core (80) and the connection sheath (81) to a temperature comprised between 600°C and 1060°C, preferably between 800°C and 1000°C, in particular a temperature of 920°C,
   - applying a pressure comprised between 500 bar and 1500 bar, preferably between 800 bar and 1200 bar, in particular a pressure of 1020 bar, to the connection sheath (81),
   - applying a pressure and temperature plateau for a period of 30 minutes to several hours, preferably 1 hour to 3 hours, in particular 2 hours,
   - allowing the assembly to cool and depressurising.

13. Method according to any one of Claims 10 to 12, **characterised in that** the conductive core (74) and the connection core (80) of the first connection strip (78) and/or of the second connection strip (78) are joined together by a high-temperature braze-welding or high-temperature brazing method.

14. Use of at least one electrical conductor (70) according to any one of Claims 1 to 7, as an electrical conductor of an electrochemical system comprising:

- an enclosure (60) for air circulation in the volume delimited thereby,
- an electrochemical device housed in the enclosure (60), comprising:

- a high-temperature SOEC/SOFC-type solid oxide stack (20) of elementary electrochemical cells (10) each comprising an electrolyte (16) interposed between a cathode (12) and an anode (14) and connected in series between two electrical terminals (30, 32), and
- said at least one electrical conductor (70) connected to at least one of the two electrical terminals (30, 32).

15. Electrochemical system comprising:

- an enclosure (60) for air circulation in the volume delimited thereby,
- an electrochemical device housed in the enclosure (60), comprising:

- a high-temperature SOEC/SOFC-type solid oxide stack (20) of elementary electrochemical cells (10) each comprising an electrolyte (16) interposed between a cathode (12) and an anode (14) and connected in series between two electrical terminals (30, 32),

the electrochemical system being **characterised in that** it comprises:

- at least one electrical conductor (70) according to any one of Claims 1 to 7, connected to at least one of the two electrical terminals (30, 32).

[Fig. 1]

$$O^{2-} \rightarrow 1/2\ O_2 + 2e^-$$

$$H_2O + 2e^- \rightarrow H_2 + O^{2-}$$

FIG. 1

[Fig. 2]

FIG. 2

[Fig. 3]

60  20          64  Sortie air de
                        balayage

Zone chaude

STACK                30          68

                     32          I
62                               28
Entrée air de
balayage                         66

52    54    56    58

Entrée  Entrée  Sortie  Sortie
anode  cathode  anode  cathode

# FIG. 3

[Fig. 4]

10

$1/2\ O_2 + 2e^- \rightarrow O^{2-}$

$O_2$

$e^-$                           14

                                16
          $O^{2-}$

C                               12

          $H_2$      $H_2O$

$e^-$

$H_2 + O^{2-} \rightarrow H_2O + 2e^-$

# FIG. 4

[Fig. 5]

FIG. 5

[Fig. 6]

FIG. 6

[Fig. 7]

FIG. 7

[Fig. 8]

FIG. 8

[Fig. 9]

FIG. 9

[Fig. 10]

FIG. 10

[Fig. 11]

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H01283772 A
- WO 2011110676 A1
- FR 3036840 A1
- CN 202608143 U